# EUROPÄISCHE PATENTSCHRIFT

(11) **EP 0 417 559 B1**
(45) Veröffentlichungstag und Bekanntmachung des Hinweises auf die Patenterteilung: **28.06.1995**
(21) Anmeldenummer: 90116629.8
(22) Anmeldetag: 30.08.1990
(51) Int. Cl.: C08J 3/03

(54) **Silicon-Emulsionen**
Silicone emulsions
Emulsions à base de silicones

(30) Priorität: 12.09.1989 DE 3930410
(43) Veröffentlichungstag der Anmeldung: 20.03.1991
(73) Patentinhaber: BAYER AG, 51368 Leverkusen (DE)
(72) Erfinder: Walz, Klaus, Dr., D-5090 Leverkusen 3 (DE); Schlak, Ottfried, Dr., D-5000 Köln 80 (DE); Pfeiffer, Josef, Dipl.-Ing., D-5090 Leverkusen 3 (DE); Ehlert, Hans-Albert, D-5090 Leverkusen 1 (DE)

(56) Entgegenhaltungen:
- EP-A- 0 043 985
- EP-A- 0 138 192
- EP-A- 0 291 941
- DE-A- 1 130 408
- DE-A- 2 439 199
- FR-A- 1 572 619

## Beschreibung

Gegenstand der Erfindung sind Öl-in-Wasser-Emulsionen von Siliconen sowie deren Verwendung.

Die Emulsionen sind dadurch gekennzeichnet, daß sie
I. 1-70 Gew.-% eines Organopolysiloxans - bezogen auf die gesamte Emulsion,
II. 2-40 Gew.-% eines amphoteren Tensids - bezogen auf I und
III. 3-50 Gew.-% eines einwertigen Alkohols aus der Gruppe der aliphatischen C₃-C₁₂-Alkanole, der Phenyl-C₁-C₃-alkanole, des Cyclohexanols und 2-Methyl-cyclohexanols und der C₁-C₄-Alkoxy-C₂-C₄-alkanole, bezogen auf I,
enthalten.

Vorzugsweise setzen sich die Emulsionen wie folgt zusammen:
5-50 Gew.-% I (bezogen auf Emulsion)
5-20 Gew.-% II (bezogen auf I)
5-25 Gew.-% III (bezogen auf I)
Aus EP-A 138 192 ist ein Verfahren zur Herstellung von Organopolysiloxan-Emulsionen bekannt, bei dem ein Organopolysiloxan mit polaren Gruppen mit einem im Organopolysiloxan unlöslichen Tensid und soviel Wasser gemischt wird, daß ein durchscheinendes Ölkonzentrat gebildet wird, das schnell in weiterem Wasser dispergiert wird. Als Tenside werden anionische, kationische, nichtionische oder amphotere genannt. Bevorzugte und in den Ausführungsbeispielen überwiegend angewandte Tenside sind die nichtionischen, von denen aber gemäß Vergleichsbeispielen im EP-A 138 192 auch nicht alle brauchbar sind. Daneben werden in einigen Ausführungsbeispielen anionische Tenside und in einem Beispiel ein kationisches Tensid eingesetzt. Ein zweiwertiger Alkohol (Ethylenglykol) wird als Gefrierschutz eingesetzt.

Als Polysiloxane (I) kommen praktisch alle üblichen bei Raumtemperatur flüssigen Silicone in Betracht, wobei gegebenenfalls N-modifizierte, insbesondere N-acylierte Aminosilicone besonders geeignet sind. Unter "Acylierung" wird dabei die Einführung des Restes -COR oder CONHR (R = KW-Rest) verstanden.

Bevorzugte Verbindungen (I) entsprechen der Formel 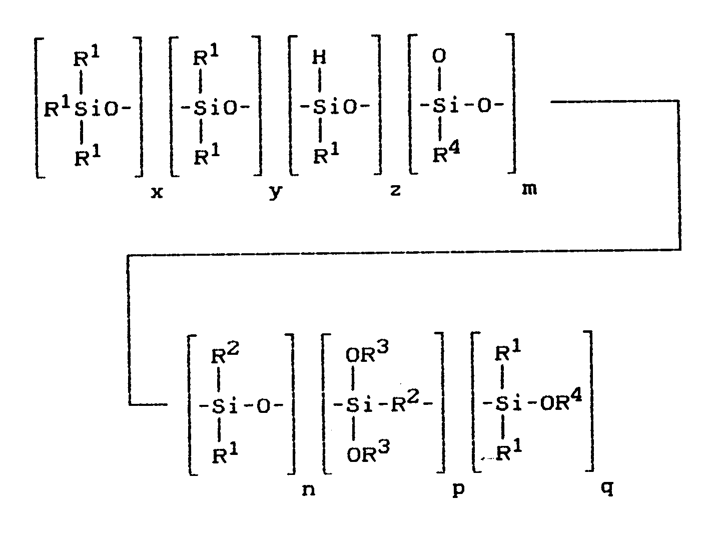
worin - unabhängig voneinander -
- R¹: eine Alkylgruppe mit 1 bis 6 C-Atomen, eine Vinylgruppe oder eine Arylgruppe,
- R²: eine C₂-C₆-Alkyl- oder Arylgruppe, die durch eine gegebenenfalls C₁-C₄-alkylierte oder acylierte Aminogruppe substituiert ist,
- R³: eine Alkylgruppe mit 1 bis 6 C-Atomen,
- R⁴: eine C₁-C₆-Alkylgruppe, Arylgruppe oder Aminoalkylgruppe mit 1 bis 12 C-Atomen bedeuten,
q, x und m = 0 bis 5,
m + n + p = 1 bis 10, vorzugsweise 2 bis 6,
y + z = 20 bis 1400 ist und wobei z auch O sein kann, wobei
die Arylreste vorzugsweise Phenylreste, die Alkylreste vorzugsweise Methylreste und die Acylreste vorzugsweise Formyl- und Acetylreste sind.

Solche Verbindungen sind in großer Zahl bekannt und beispielsweise in folgender Patentliteratur beschrieben: DE-A 37 06 203 und EP-A 161 888.

Geeignete Tenside II sind Aminoxide, Betaine und Sulfobetaine, die mindestens einen C₈-C₂₄-Kohlenwasserstoffrest enthalten, oder deren Mischungen.

Bevorzugte Tenside sind solche der Formel 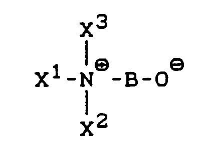
worin
- B: ein Brückenglied, wie z.B. -CH₂CO-, -CH₂CH₂CO-, -(CH₂)₂₋₄-SO₂-, oder eine direkte Bindung,
- X¹: ein gegebenenfalls durch -O-, -CONH- oder -COO-unterbrochener und/oder gegebenenfalls durch OH substituierter C₁₀-C₂₂-Alkylrest oder ein C₁₀-C₂₂-Alkenylrest und
- X²/X³: ein gegebenenfalls durch OH substituierter C₁-C₄-Alkylrest bedeuten.

Vorzugsweise stehen: B für direkte Bindung oder CH₂CO, X¹ für C₁₀-C₂₂-Alkyl oder Alkenyl und
X²/X³ für CH₃, CH₂CH₂OH oder

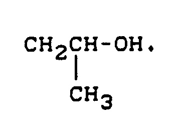

Weitere bevorzugte Reste X₁ sind: C₉₋₁₉-Alkyl-CONH-(CH₂)₃-, C₉₋₁₉-Alkenyl-CONH(CH₂)₃- und C₁₀₋₂₀-Alkyloxy(C₂-C₃)alkylen.

Beispiele für geeignete Aminoxide sind in DE-A 16 19 530, Seiten 1 bis 5 aufgelistet.

Beispiele für Betaine sind:
Dodecyl-dimethyl-betain, Kokosalkyl-dimethyl-betain, Tetradecyl-dimethyl-betain, Octadecyl-dimethyl-betain, Talgfettalkyl-dimethyl-betain, Oleyl-dimethyl-betain, Kokosalkyl-bis-hydroxyethyl-betain, Stearyl-bis-hydroxyethylbetain, Lauramidopropyl-betain, Kokosamidopropylbetain, Oleylamidopropyl-betain, Dodecyloxypropyldimethyl-betain, Laurylaminoessigsäure, Kokosalkylaminopropionsäure.

Geeignete Alkohole III sind C₃-C₁₂-Alkanole, Phenyl-C₁-C₃-alkanole, Cyclohexanole und C₁-C₄-Alkoxy-C₂-C₄-alkanole. Beispielsweise seien genannt: Propanol, Isopropanol, n-Butanol, Butanol-2, tert.-Butanol, Isobutanol, n-Pentanol, Pentanol-2, Pentanol-3, Isoamylalkohol, n-Hexanol, n-Octanol, 2-Ethylhexanol, Trimethylhexanol, Decanol, Dodecylalkohol, 2-Methoxypropanol-1, Ethoxyethanol, Propoxyethanol, Butoxyethanol, Cyclohexanol, 2-Methylcyclohexanol und Benzylalkohol. Bevorzugt sind C₃-C₆-Alkohole und Cyclohexanol.

Eine spezielle Ausführungsform des Erfindungsgegenstandes sind Mikroemulsionen auf der Basis der Komponenten I bis III, die dadurch gekennzeichnet sind, daß die mittlere Teilchengröße der Siliconölphase kleiner 0,15 »m beträgt.

Die Herstellung der erfindungsgemäßen Emulsion kann auf verschiedene Weise erfolgen.

Zweckmäßigerweise geht man dabei so vor, daß zunächst durch Vermischen der Komponenten I, II und III sowie geringer Mengen Wasser ein Konzentrat hergestellt wird, das man dann unter Rühren mit Wasser verdünnt oder in Wasser einrührt.

Die Wassermenge zur Herstellung des Konzentrats beträgt etwa das zwei- bis fünffache der Tensidmenge.

Das Vermischen der Komponenten I bis III kann in an sich beliebiger Reihenfolge durchgeführt werden.

Im allgemeinen werden die Tenside nicht in reiner Form, sondern als 10 bis 50 %ige wäßrige Lösung eingesetzt (% = Gew.-%). Auf diese Weise erübrigt sich in den meisten Fällen der Zusatz von Wasser bei der Zubereitung der Konzentrate.

Bei der Verdünnung der Konzentrate werden im allgemeinen keine Emulgiergeräte benötigt, was ein besonderer Vorzug derselben ist.

Die erfindungsgemäßen Emulsionen können vielseitig verwendet werden, beispielsweise in der Haar- und Körperpflege, Bauindustrie, Lederindustrie, Papierindustrie und dgl.

Vorzugsweise werden sie im Textilsektor als Imprägniermittel, Entschäumer und vor allem als Weichmachungsmittel eingesetzt.

Je nach Verwendungsart können die Emulsionen außer Wasser und den Komponenten I bis III spezifische Hilfsmittel, wie Fette, Paraffinöle, Parfümöle, Pigmente, nichtionische Tenside, Farbstoffe und dgl. enthalten.

Die Vorteile der neuen Emulsionen, insbesondere derer auf Aminoxid-Basis, gegenüber der Vielzahl vorbekannter Öl-in-Wasser-Systeme sind die einfache Herstellbarkeit (siehe oben), eine gute Reproduzierbarkeit und ein hervorragender Weichmachungseffekt. Hervorzuheben ist weiterhin, das sie den wasserabweisenden Effekt von Hydrophobausrüstungen nicht beeinträchtigen.

Auch genügt es im allgemeinen, eine vergleichsweise geringe Emulgatormenge zur Zubereitung der Emulsionen einzusetzen.

### Beispiel 1

40 Teile eines Polysiloxans mit der (idealisierten) Formel 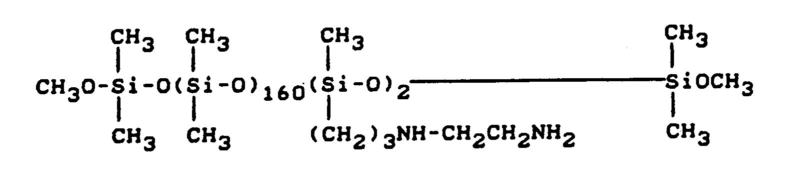
werden zu einer Lösung von 2,2 Teilen C₁₃-C₁₅-Alkyldimethyl-aminoxid in 5,2 Teilen Wasser und 2,4 Teilen Isobutanol gegeben und ca. 1 Stunde mit 100 U/min gerührt. Anschließend setzt man 150 Teile Wasser zu und rührt ca. 30 Minuten. Es wird eine fast transparente, stabile Emulsion erhalten (Teilchengröße 0,13 »m).

### Beispiel 2

27,5 Teile C₁₃₋₁₅-Alkyl-dimethylaminoxid, gelöst in 65 Teilen wasser, werden mit 30 Teilen Isobutanol vermischt. Zu dieser Mischung gibt man innerhalb von 30 Minuten 500 g des in Beispiel 1 verwendeten Aminopolysiloxans. Man rührt 2 Stunden bei Raumtemperatur und gibt dann unter Rühren innerhalb von 30 Minuten 1160 Teile Wasser hinzu. Es wird eine sehr feine, transparente Emulsion mit einem Silicongehalt von ca. 30 % erhalten (Teilchengröße 0,1 »).

### Beispiel 3

60 Teile eines Aminopolysiloxans mit der idealisierten Formel 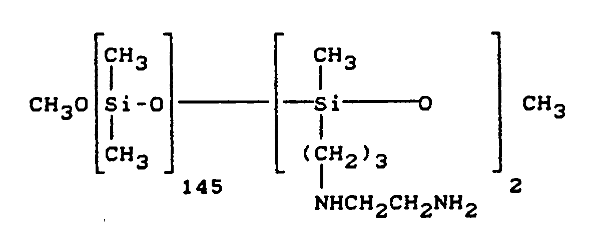
werden mit 30 Teilen eines handelsüblichen Aminoxids (z.B. Laviron®118 S (Henkel) (40 %ig) und 10 Teilen Isopropanol vermischt und ca. 15 Minuten verrührt. Danach gibt man 200 Teile Wasser hinzu und läßt ca. 20 Minuten rühren. Es wird eine transparente, stabile Emulsion erhalten (Teilchengröße 0,04 »).

### Beispiel 4

40 Teile eines Aminopolysiloxans mit der idealisierten Formel 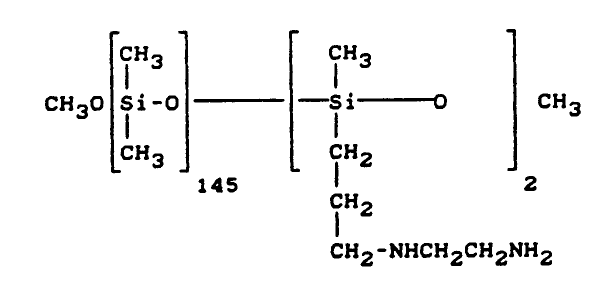
werden mit 5,52 Teilen C₁₃₋₁₅-Alkyl-bis-hydroxyethylaminoxid, gelöst in 12,9 Teilen Wasser, und 3 Teilen Isopropanol vermischt und ca. 15 Minuten bei Raumtemperatur gerührt. Anschließend setzt man 138 Teile Wasser zu. Man rührt ca. 30 Minuten und erhalt eine feine, stabile Emulsion (Teilchengröße 0,2 »).

### Beispiel 5

25 Teile einer 30 %igen wäßrigen Lösung von C₁₃₋₁₅-Alkyl-dimethylaminoxid und 10 Teile n-Butanol werden vermischt und dann bei Raumtemperatur innerhalb von 15 Minuten mit 65 Teilen eines Aminopolysiloxans versetzt, das der idealsierten Formel 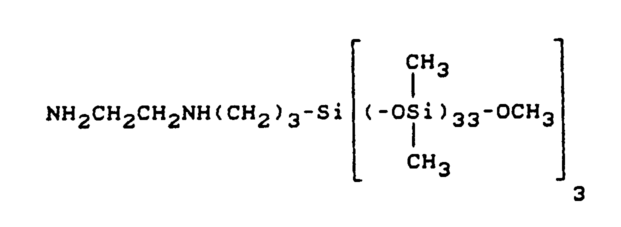
entspricht. Man rührt weitere 15 Minuten und gibt dann die erhaltene Mischung unter Rühren zu 225 Teilen Wasser. Es wird eine sehr feine, transparente Emulsion erhalten (Teilchengröße 0,06 »).

### Beispiel 6

35 Teile des in Beispiel 1 verwendeten Aminopolysiloxans und 35 Teile eines Epoxypolysiloxans mit der idealisierten Formel 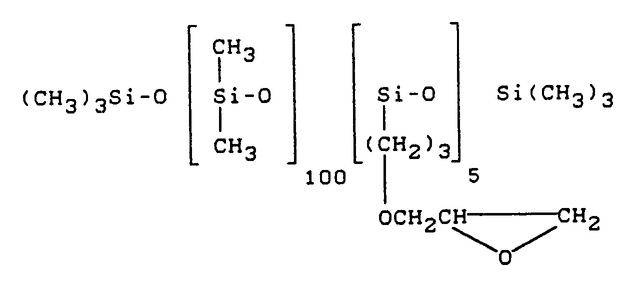
werden mit 25 Teilen eines handelsüblichen Aminoxids (z.B. Laviron® 118 S) und 5 Teilen Isobutanol 30 Minuten bei Raumtemperatur gerührt. Anschließend läßt man innerhalb von 1 Stunde 250 Teile Wasser zutropfen und rührt 30 Minuten nach. Es wird eine feine, stabile Emulsion erhalten (Teilchengröße 0,22 »).

### Beispiel 7

60 Teile eines Aminopolysiloxans mit der idealisierten Formel 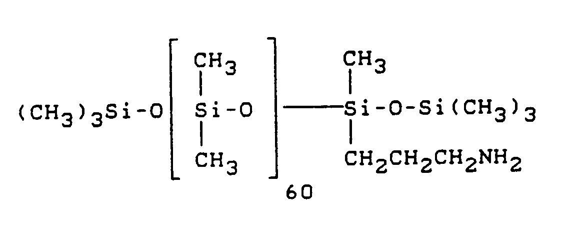
werden mit 27,7 Teilen einer 30 %igen wäßrigen Lösung eines Betains (z.B. Tensibet®55, ICI) und 4,6 Teilen n-Hexanol zusammengemischt und 15 Minuten bei Raumtemperatur gerührt. Dann laßt man innerhalb von 30 Minuten 208 Teile Wasser zutropfen. Es wird eine sehr stabile Emulsion erhalten (Teilchengröße 0,18 »).

### Beispiel 8

20 Teile eines Polysiloxans der Formel 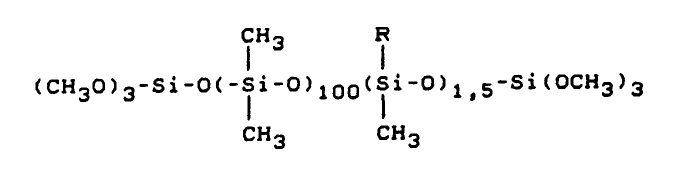
in der
- R: für den Rest 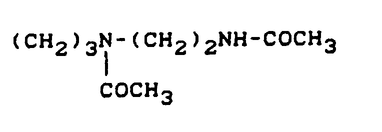 steht,
werden mit 1,5 Teilen Isobutanol und 2,75 Teilen Kokosalkyl-dimethylaminoxid (gelöst in 6,5 Teilen Wasser) versetzt und 30 Minuten bei 20 bis 30°C gerührt (150 U/min). Anschließend gibt man 69 Teile Wasser hinzu und rührt noch 1 Stunde. Es wird eine feine, lagerstabile Emulsion erhalten (Teilchengröße 0,15 bis 0,2 »).

Ein entsprechender Ansatz ohne Zusatz von Isobutanol ergibt nur eine Emulsion mit einer Teilchengröße von über 5 », die sofort in 2 Phasen zerfällt.

### Beispiel 9

84 Teile eines Polysiloxans der Formel 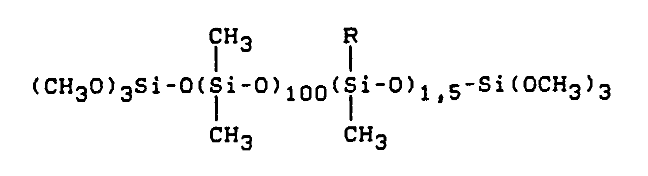
in der
- R: für den Rest 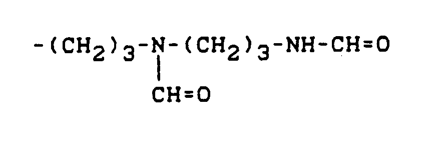 steht,
werden mit 18 Teilen Isodecyloxypropyl-di(hydroxyethyl)aminoxid, 18 Teilen Wasser und 13,4 Teilen Cyclohexanol vermischt. Man rührt 1/2 Stunde und gibt dann 287 Teile Wasser unter Rühren zu. Es wird eine stabile, transparente Emulsion erhalten (Teilchengröße etwa 0,04 »).

### Beispiel 10

20 Teile eines Polysiloxans mit der in Beispiel 8 angegebenen Formel, in der jedoch
- R: für den Rest 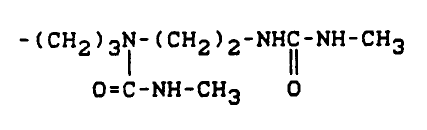 steht,
werden mit 8,9 Teilen einer 30 %igen wäßrigen Lösung eines C₁₃₋₁₅-Alkyl-dimethylamin-oxids und 2,8 Teilen Cyclohexanol vermischt und 1/2 Stunde gerührt. Anschließend gibt man 68 Teile Wasser langsam zu und rührt 1/2 Stunde nach. Es wird eine stabile, transparente Emulsion erhalten (Teilchengröße etwa 0,04 »).

### Anwendungsbeispiel 1

Zu einer Labor-Haspelkufe werden 6000 ml Leitungswasser von 25°C vorgelegt und mit Essigsäure auf pH 6 eingestellt. In diese Lösung gibt man 9,0 g des Produktes aus Beispiel 1. Es entsteht eine leicht trübe Flotte. 300 g eines Interlock-Gewirkes aus 100 % Baumwolle, mit einem m²-Gewicht von 195 g, werden in der für eine Haspelkufe üblichen Weise in dieser Flotte bewegt und die Temperatur der Flotte auf 40°C erhöht. Nach Erreichen der Temperatur von 40°C wird weitere 20 min. behandelt. Die Trübung der Behandlungsflotte vermindert sich während der Behandlung.

Danach wird entwässert und bei 120°C in der üblichen Weise getrocknet.

Der erzielte Griff ist sehr weich, oberflächenglatt, und das Gewirke zeigt eine ausgezeichnete Elastizität und Rücksprungvermögen. Die Vernähbarkeit, gemessen an der Nadeleinstichkraft und der Nadeltemperatur, wird verbessert.

Ähnliche Ergebnisse erhält man mit den Emulsionen gemäß Beispielen 2 bis 10.

### Anwendungsbeispiel 2

Zu 980 ml Leitungswasser werden 20 ml des Produktes aus Beispiel 1 zugegeben. Diese Mischung wird in einem Laborfoulard in der üblichen Weise auf ein Baumwoll-Interlock-Gewirke von 195 g/m² Warengewicht aufgeklotzt, so daß eine Flottenaufnahme von 80 % erzielt wird. Anschließend wird das Material bei 120°C getrocknet.

Der erzielte Griff ist sehr weich und oberflächenglatt und das Gewirke zeigt eine ausgezeichnete Elastizität und Rücksprungvermögen. Die Vernähbarkeit, gemessen an der Nadeltemperatur und der Nadeleinstichkraft, wird verbessert.

Ähnliche Ergebnisse erhält man mit den Emulsionen gemäß Beispiele 2 bis 10.

## Patentansprüche

1. Siliconemulsionen vom Öl-in-Wasser-Typ enthaltend
I. 1-70 Gew.-% eines Organopolysiloxans - bezogen auf die gesamte Emulsion
II. 2-40 Gew.-% eines amphoteren Tensids - bezogen auf I und
III. 3-50 Gew.-% eines einwertigen Alkohols aus der Gruppe der aliphatischen C₃-C₁₂-Alkanole, der Phenyl-C₁-C₃-alkanole, des Cyclohexanols und 2-Methylcyclohexanols und der C₁-C₄-Alkoxy-C₂-C₄-alkanole, bezogen auf I.

2. Emulsionen gemäß Anspruch 1, dadurch gekennzeichnet, daß die Polysiloxane gegebenenfalls N-modifizierte Aminosilicone sind.

3. Emulsionen gemäß Anspruch 1, dadurch gekennzeichnet, daß die Tenside Aminoxide sind.

4. Emulsionen gemäß Anspruch 1, dadurch gekennzeichnet, daß die Tenside solche der Formel 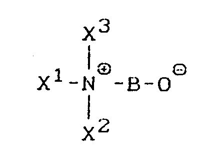 worin
B ein Brückenglied, wie z.B. -CH₂CO-, -CH₂CH₂CO-, -(CH₂)₂₋₄-SO₂-, oder eine direkte Bindung,
X¹ ein gegebenenfalls durch -O-, -CONH- oder -COO-unterbrochener und/oder gegebenenfalls durch OH substituierter C₁₀-C₂₂-Alkylrest oder ein C₁₀-C₂₂-Alkenylrest und
X²/X³ ein gegebenenfalls durch OH substituierter C₁-C₄-Alkylrest bedeuten, sind.

5. Emulsionen gemäß Anspruch 1, dadurch gekennzeichnet, daß die Tenside Betaine sind.

6. Emulsionen gemäß Anspruch 1, dadurch gekennzeichnet, daß die mittlere Teilchengröße der Siloxane kleiner 0,20 »m ist.

7. Emulsionen gemäß Anspruch 1, dadurch gekennzeichnet, daß die Alkohole C₃-C₆-Alkanole oder Cyclohexanol sind.

8. Emulsionen gemäß Anspruch 1, dadurch gekennzeichnet, daß Isobutanol als Alkohol enthalten ist.

9. Emulsionen gemäß Anspruch 1, dadurch gekennzeichnet, daß sie
5-50 Gew.-% I (bezogen auf Emulsion)
5-20 Gew.-% II (bezogen auf I)
5-25 Gew.-% III (bezogen auf I) enthalten.

10. Verfahren zum Behandeln von Textilmaterialien, dadurch gekennzeichnet, daß Emulsionen gemäß Anspruch 1 verwendet werden.

## Claims

1. Silicone emulsions of the oil-in-water type containing
I. 1-70% by weight of an organopolysiloxane - based on the entire emulsion,
II. 2-40% by weight of an amphoteric surfactant -based on I and
III. 3-50% by weight of a monohydric alcohol from the group comprising aliphatic C₃-C₁₂-alkanols, phenyl-C₁-C₃-alkanols, cyclohexanol and 2-methylcyclohexanol and C₁-C₄-alkoxy-C₂-C₄-alkanols, based on I.

2. Emulsions according to Claim 1, characterized in that the polysiloxanes are optionally N-modified aminosilicones.

3. Emulsions according to Claim 1, characterized in that the surfactants are amine oxides.

4. Emulsions according to Claim 1, characterized in that the surfactants are those of the formula 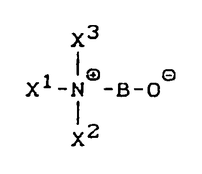 in which
B denotes a bridge member, such as for example -CH₂CO-, -CH₂CH₂CO-, -(CH₂)₂₋₄-SO₂-, or a direct bond,
X¹ denotes a C₁₀-C₂₂-alkyl radical which is optionally interrupted by -O-, -CONH- or -COO- and/or optionally substituted by OH, or denotes a C₁₀-C₂₂-alkenyl radical and
X²/X³ denote a C₁-C₄-alkyl radical which is optionally substituted by OH.

5. Emulsions according to Claim 1, characterized in that the surfactants are betaines.

6. Emulsions according to Claim 1, characterized in that the average particle size of the siloxanes is less than 0.20 »m.

7. Emulsions according to Claim 1, characterized in that the alcohols are C₃-C₆-alkanols or cyclohexanol.

8. Emulsions according to Claim 1, characterized in that they contain isobutanol as alcohol.

9. Emulsions according to Claim 1, characterized in that they contain
5-50% by weight of I (based on emulsion)
5-20% by weight of II (based on I)
5-25% by weight of III (based on I).

10. Process for treating textile materials, characterized in that emulsions according to Claim 1 are used.

## Revendications

1. Emulsions de silicones, du type huile dans eau, contenant
I. 1 à 70% en poids d'un organopolysiloxane - par rapport à l'émulsion complète,
II. 2 à 40% en poids d'un tensioactif amphotère - par rapport à I, et
III. 3 à 50% en poids d'un alcool monovalent (monoalcool) choisi dans l'ensemble formé par les alcanols aliphatiques en C₃-C₁₂, les phényl-alcanols(en C₁-C₃), le cyclohexanol et le 2-méthylcyclohexanol et les alcoxy(en C₁-C₄)-alcanols en C₂-C₄, par rapport à 1.

2. Emulsions selon la revendication 1, caractérisées en ce que les polysiloxanes sont des aminosilicones éventuellement modifées sur l'azote.

3. Emulsions selon la revendication 1, caractérisées en ce que les tensioactifs sont des oxydes d'amines.

4. Emulsions selon la revendication 1, caractérisées en ce que les tensioactifs sont ceux de formule : 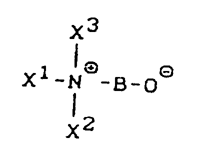 dans laquelle
B représente un terme de pontage, comme par exemple -CH₂CO-, -CH₂CH₂CO-, -(CH₂)₂₋₄-SO₂-, ou une liaison directe,
X¹ représente un reste alkyle en C₁₀-C₂₂, éventuellement interrompu par -O-, -CONH- ou -COO- et/ou éventuellement substitué par OH ou un reste alcényle en C₁₀-C₂₂, et
X²/X³ représentent un reste alkyle en C₁-C₄ éventuellement substitué par OH.

5. Emulsions selon la revendication 1, caractérisées en ce que les tensioactifs sont des bétaïnes.

6. Emulsions selon la revendication 1, caractérisées en ce que la grosseur moyenne des particules des siloxanes est inférieure à 0,20 »m.

7. Emulsions selon la revendication 1, caractérisées en ce que les alcools sont des alcanols en C₃-C₆ ou du cyclohexanol.

8. Emulsions selon la revendication 1, caractérisée en ce que l'isobutanol est contenu comme alcool.

9. Emulsions selon la revendication 1, caractérisée en ce qu'elles contiennent
5 à 50% en poids de I (par rapport à l'émulsion)
5 à 20% en poids de II (par rapport à I),
5 à 25% en poids de III (par rapport à I).

10. Procédé pour traiter des matières textiles, caractérisé en ce qu'on utilise des émulsions selon la revendication 1.
